## Europäisches Patentamt
## European Patent Office
## Office européen des brevets

(11) Publication number: **0 050 206**
**B1**

(12) # EUROPEAN PATENT SPECIFICATION

(45) Date of publication of patent specification: **15.01.86**

(51) Int. Cl.⁴: **H 01 B 9/06**

(21) Application number: **81106865.9**

(22) Date of filing: **02.09.81**

(54) **Pipe-type oil-filled cable line.**

(30) Priority: **05.09.80 JP 123273/80**
**05.09.80 JP 123274/80**

(43) Date of publication of application:
**28.04.82 Bulletin 82/17**

(45) Publication of the grant of the patent:
**15.01.86 Bulletin 86/03**

(84) Designated Contracting States:
**DE FR GB**

(56) References cited:
**US-A-3 047 652**

(73) Proprietor: **The Chubu Electric Power Company, Inc.**
**1, Toushincho Higashi-ku**
**Nagoya-shi Aichi-ken (JP)**

(73) Proprietor: **THE FUJIKURA CABLE WORKS, LTD.**
**5-1, Kiba 1-chome**
**Koto-ku Tokyo 135 (JP)**

(72) Inventor: **Gomi, Yoshiaki**
**92-13, Aza-hirabuchi Shinkai-cho**
**Kasugai-shi Aichi-ken (JP)**
Inventor: **Hirata, Takahiro**
**134 3-chome, Sakuragaoka Kani-cho**
**Kani-gun Gifu-ken (JP)**
Inventor: **Takaoka, Michio**
**2-23-9, Satsukigaoka Chiba-shi**
**Chiba-ken (JP)**
Inventor: **Mohtai, Tsuneaki**
**35-8, Oowada-shinden**
**Yachiyo-shi Chiba-ken (JP)**
Inventor: **Akashi, Kazuya**
**Fujikura-daisan-ryo, 4-27**
**6-chome, Kiba Koto-ku Tokyo (JP)**

(74) Representative: **Lehn, Werner, Dipl.-Ing. et al**
**Hoffmann, Eitle & Partner Patentanwälte**
**Arabellastrasse 4 (Sternhaus)**
**D-8000 München 81 (DE)**

Courier Press, Leamington Spa, England.

## Description

This invention relates to a pipe-type oil-filled (hereinafter referred to as POF) cable line for an electric power transmission system.

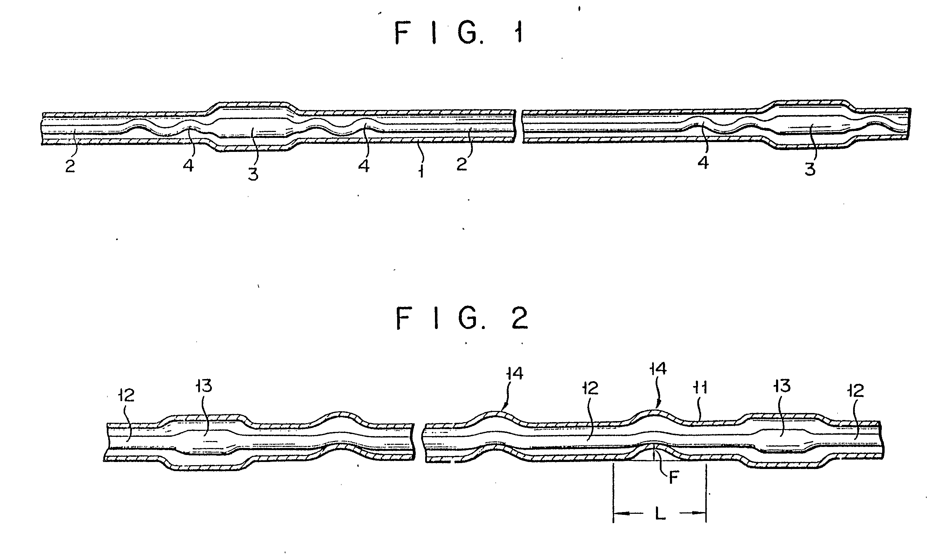

A POF cable generally comprises cable cores 2 and their joints 3 connecting the cable cores 2 together in a steel pipe 1 as shown in Fig. 1. The POF cable described above is conventionally installed in a straight line, except for the case making a detour of obstructions lying in the cable-laying route. The longitudinal thermal expansion of the cable core 2 when supplied with electrical load is conventionally absorbed by the snake-like bending 4 of the cable core 2, that is, the cable snaking, which occurs in a relatively broad space between the steel pipe 1 and the cable core 2 (the steel pipe has an inner diameter approximately 2.7 times larger than the outer diameter of the cable core 2).

Generally the cable snaking 4 of the cable core 2 tends to occur near the cable joint 3 and the thermal expansion of the cable core tends to concentrate at cable snaking areas. Consequently the curvature radius of the cable snaking 4 becomes small and repeated thermal bending will create soft spots and creases in insulation papers, in the case of the paper-insulated cable. And in some extreme cases, such bending will lead to dielectric breakdown.

This invention has been accomplished to resolve the above-mentioned defects.

To attain the above-mentioned object, this invention provides a POF cable line including pipe and cable core drawn into the pipe, characterised in that the pipe comprises at least one curved offset portion arranged at any position along the pipe in order more readily to accommodate snaking of the core resulting from longitudinal thermal expansion of the core.

Having the cable core already bent slightly in the curved offset section causes the cable snaking to occur more easily there than the cable core in the straight pipe, when the POF cable line is in operation.

This invention can be more fully understood from the following detailed description when taken in conjunction with the accompanying drawings, in which:

Fig. 1 illustrates, in a horizontal plane, the arrangement of the conventional POF cable line;

Fig. 2 indicates, in a longitudinal plane, the arrangement of a POF cable according to one embodiment of this invention;

Figs. 3 to 5 set forth the state in which the cable core in the steel pipe of Fig. 2 is snaking;

Fig. 6 shows, in a horizontal plane, the arrangement of a POF cable according to another embodiment of the invention; and

Figs. 7 and 8 illustrate the manner in which the cable core in a steel pipe of Fig. 6 is snaking.

Description is now given by reference to Fig. 2 of a POF cable line according to one embodiment of this invention.

Reference numeral 11 is a steel pipe. Reference numeral 12 represents, for example, a 275 KV, 2500 mm$^2$ paper-insulated power cable core comprising a cable conductor (only one cable core is typically shown for briefness of representation in every figure, though the POF cable line is normally formed of three cable cores), which is put in the steel pipe 11. Reference numeral 13 is a cable joint for connecting together the cable cores 12. The cable joint is provided at an interval predetermined by the conditions involving cable-laying route. Further, the steel pipe 11 is filled with insulation oil. Reference numeral 14 denotes a curved offset portion of the steel pipe 11 having, for example, a curvature radius of approximately 30 meters, at least one of which is arranged in the straight steel pipe, in a general laying-route of the cable line which includes any straight parts and also any curved parts installed for making detour of obstructions lying in the cable laying-route. The longitudinal position of the curved offset portion 14 need not be limited to that indicated in Fig. 2. Thus, said offset portion 14 may be arranged at any arbitrary position along the steel pipe 11. Fig. 2 indicates the offset portion 14 which is curved in a horizontal plane. The offset portion 14 is shown in every Figure curved in a horizontal plane relative to the ground surface. However, the invention is not limited to this arrangement. Thus, the curved offset portion may be curved in the vertical plane, for example. The curved offset portion may also be arranged in any planes defined between vertical and horizontal planes. The curved offset portion may be arranged curved in such two dimensional surfaces. Or it is possible to provide a cable with the offset portions curved on any surfaces i.e. three dimensional surfaces. Further, the offset portion may have a segmental, sine wave or parabolic form. In other words, the offset portion may take any form, as described above provided it is defined by a smooth and continuous curve. The form of the offset portion need not be limited to that which is illustrated in the above embodiment, but may be defined by an S-bent waveform. Further, a plurality of offset portions may be continuously arranged on the steel pipe 11. The number of offset portions 14 arranged in a cable portion between two successive manholes (the manhole-to-manhole interval) or joint-to-joint interval, the distance of the adjacent offset portions, the length of each offset portion and the offset width F (indicated in Fig. 2) are determined in consideration of the anticipated expansion and contraction of the cable core 12.

Description is now given with reference to the accompanying drawings of a POF cable line embodying this invention. Unlike an offset portion provided for a general cable line, the offset portion 14 arranged on the steel pipe 11 embodying the invention is not intended to absorb the expansion of the steel pipe itself, but is intended to cause the cable core 12 to snake easily in the curved offset portion 14. The steel pipe 11 of the POF cable line has a sufficient internal space to allow a cable core to snake (the inner diameter of the steel pipe 11 is approximately 2.7 times larger than the outer diameter of the cable core 12). Therefore, the offset portion 14 used in this invention need not have an extremely small curvature.

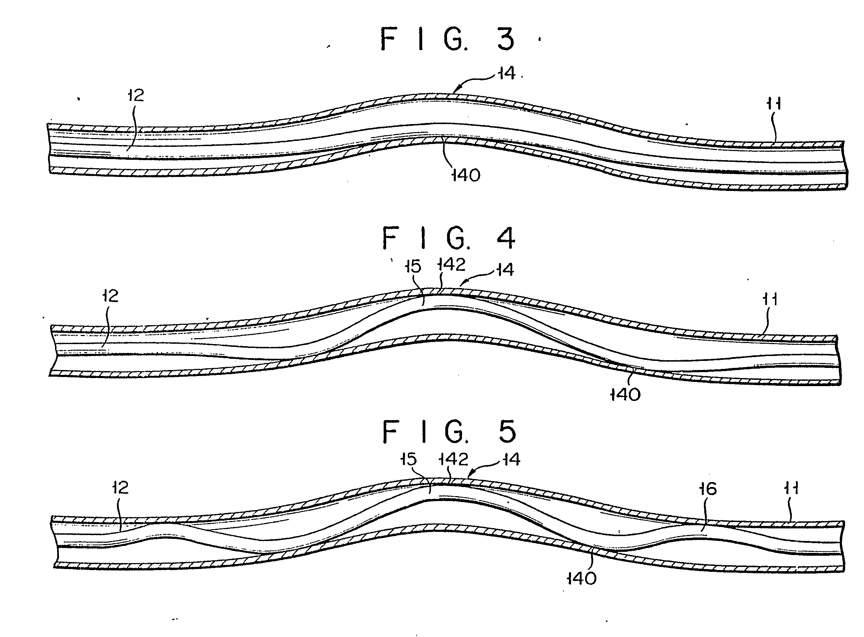

Description is now given with reference to Figs. 3 to 5 of the state in which the cable core 12 of a POF cable line embodying this invention snakes due to longitudinal thermal expansion.

(1) For example, when the cable core 12 is not electrically loaded, that is, is not longitudinally thermally expanded, then the cable core 12 is slightly bent due to its bending in the offset portion 14 and touches the inner side wall 140 of the offset portion 14.

(2) The slightly bent portion of the unloaded cable core 12 in the offset portion 14 tends to move easily as soon as the cable core 12 longitudinally thermally expands when electrically loaded, thereby providing a first region of cable snaking 15. The cable core 12 moves towards the outer side until the cable core 12 touches the inner surface 142 of the steel pipe 11.

(3) When the thermal expansion of the cable core 12 is not fully absorbed in the offset portion 14, then a second region of cable snaking 16 occurs in the both sides near the offset portion 14 of the cable core 12 in order to absorb the thermal expansion.

With a POF cable line embodying this invention, the longitudinal thermal expansion of the cable core 12 is absorbed, to begin with, by its first region of cable snaking 15 in the offset portion 14 arranged on the steel pipe 11. The thermal expansion of the cable core 12 which is not fully absorbed by the first region of cable snaking 15, can be absorbed by producing the second region of cable snaking 16 at both sides of the offset portion 14. Therefore, the phenomenon of the concentration of the cable expansion at one spot near the cable joint 13 as is the case with the conventional POF cable line is avoidable, thereby preventing the occurrence of creases or soft spots of insulation paper.

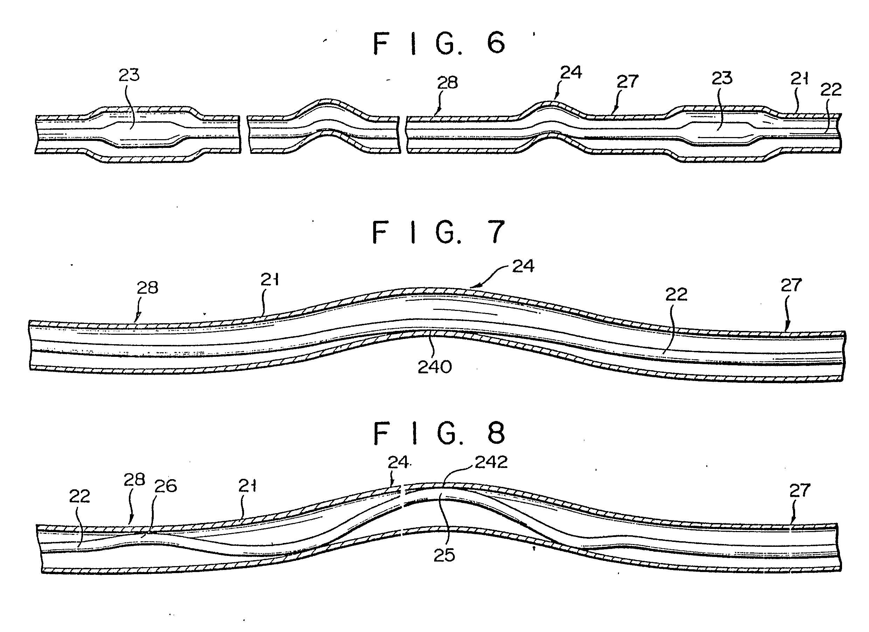

Description is now given with reference to Fig. 6 of a POF cable line according to another embodiment of this invention. Reference numeral 21 is a steel pipe in a general laying-route of the cable line which includes any straight parts and also any curved parts installed for making detour of obstructions laying in the cable laying-route. Reference numeral 22 represents, for example, a 275 KV, 2500 mm² paper-insulated power cable core comprising a cable conductor (as in the Fig. 2 embodiment, only one cable core is typically shown for briefness of representation in every figure, though the POF cable line is normally formed of three cable cores), which is put in the steel pipe 21. Reference numeral 23 is a cable joint for connecting together adjacent cable cores 22. The steel pipe 21 is filled with insulation oil. Reference numeral 27 shows a straight portion of the steel pipe 21 which lies near the cable joint 23, and reference numeral 24 is an offset portion near the cable joint 23. Reference numeral 28 represents a straight portion of the steel pipe 21. The straight portion 28 is arranged on the opposite side of a curved offset portion 24 to that thereof on which the aforesaid straight portion 27 is arranged. The curved offset portion 24 is arranged with a curvature radius of approximately 30 meters, for example, and is within the horizontal plane.

In this case, it is preferred that the curved offset portion 24 should be positioned as near as possible to the cable joint 23. The straight portion 27 of the steel pipe 21 should have such a length as is required to let that portion of the cable core 22 which extends between the offset portion 24 and the cable joint 23 have a prescribed linear length in which snaking is suppressed.

Where, in the embodiment of Fig. 6, the adjacent cable joints 23 are spaced from each other at a great distance, then the longitudinal thermal expansion of the cable core 22 can be effectively absorbed by arranging one or more offset portions 24 at any position along the pipe between the adjacent cable joints 23. The form of the curved offset portion 24 need not be limited to that used in the embodiment of Fig. 6.

Description is now given with reference to Figs. 7 and 8 of the state in which the loaded cable core 22 snakes to absorb its longitudinal thermal expansion, where the curved offset portion 24 is arranged on the steel pipe 21 at a position spaced from the cable joint 23 at a prescribed distance in a space defined between the straight portions 27 set adjacent to the cable joint 23.

(1) When unloaded, the cable core 22 touches, as shown in Fig. 7, the inner wall 240 of the offset portion 24 of the steel pipe 11 in a slightly bent state.

(2) When longitudinally expanded due to temperature rise of the cable conductor, the cable core 22 which is already slightly bent when unloaded is prominently bent outwardly, as shown in Fig. 8, by expanding from the side of the straight portion 28 of the steel pipe 11, whereby a region of cable snaking 25 occurs. As a result, the expansion of the cable core 22 is absorbed at the first region of cable snaking 25.

(3) When the cable core 22 further expands to reach the inner wall 242 of the offset portion then a region of second cable snaking 26 occurs adjacent to the first region of cable snaking 25, more particularly near the boundary between the offset portion 24 and the straight portion 27 of the steel pipe 11.

The cable joint 23 is spaced from the offset portion 24 at a small distance. Therefore, that portion of the cable core 22 which corresponds to said distance is longitudinally thermally expanded slightly. Since the longitudinally thermally expanded portion of the cable core 22 is pressed against the inner wall 242 of the offset portion 24, the expansion of the cable core 22 toward the cable joint 23 is restricted. Moreover, the straight portion 27 of the steel pipe 11 is provided adjacent to the cable joint 23. Therefore, a second region of cable snaking does not occur substantially in the portion of the cable core 22 which faces the straight portion 27 of the steel pipe 11. Even if cable snaking occurs, the second region of cable snaking is small. The above-mentioned arrangement of the embodiment of Fig. 6 is intended to protect the cable joint 23 by rendering the cable core 22 as nearly as possible straight in the vicinity of the joint. This is the reason why the steel pipe 11 of the POF cable line of the embodiment of Fig. 6 is provided with straight portions 27. If made 4 meters long, for example, the straight portion 27 sufficiently serves the purpose. The embodiment of Fig. 6 has the advantage that the curved offset portion 24 enables the cable core 22 to snake easily, thereby absorbing the longitudinal thermal expansion of the cable core 22, and the further advantage that the straight portion 27 of the steel pipe 11 suppresses the effect of the snaking of the cable core 22 on the cable joint 23. If, in this case, the curved offset portion 24 is allowed to have a sufficiently large curvature radius, then the resultant snaking portion of the cable core 22 can also have a sufficiently large curvature radius. This embodiment of the invention prevents a plurality of snaking portions having a small curvature radius from occurring concentratedly at a particular spot, for example, near the cable joint as is the case with the conventional POF cable line, thereby avoiding the soft spots, creases, and tears of insulation papers and consequently dielectric breakdown.

## Claims

1. A pipe-type oil-filled (POF) cable line including pipe (11, 21) and cable core (12, 22) drawn into the pipe (11, 21), characterised in that the pipe comprises at least one curved offset portion (14, 24) arranged at any position along the pipe (11, 21) in order more readily to accommodate snaking of the cable core resulting from longitudinal expansion of the core.

2. A POF cable line according to claim 1, characterised in that at least one curved portion is arranged at a position along the pipe spaced from a cable joint (23) at a predetermined distance with a straight portion (27) of the pipe (11, 21) interposed therebetween.

3. A POF cable line according to claim 1 or 2, characterised in that the curved offset portion (14, 24) has a smooth and continuous curve.

4. A POF cable line according to claim 1 or 2, characterised in that the offset portion (14, 24) is curved in a horizontal plane.

5. A POF cable line according to claim 1 or 2, characterised in that the offset portion (14, 24) is curved in a vertical plane.

6. A POF cable line according to claim 1 or 2, characterised in that at least two said curved offset portions (14, 24) are provided, one of which is curved in a horizontal plane and the other of which is curved in a vertical plane.

7. A POF cable line according to claim 1 or 2, characterised in that at least two offset portions (14, 24) are curved in mutually different planes.

## Patentansprüche

1. Gekapselte ölgefüllte Kabelanlage mit Rohr (11, 21) und in das Rohr (11, 21) gezogenem Kabelkern (12, 22), dadurch gekennzeichnet, daß das Rohr wenigstens einen gekrümmten versetzten Teil (14, 24), welcher an irgendeiner Stelle entlang des Rohres (11, 21) angeordnet ist, aufweist, um ein Schlängeln des Kabelkerns infolge Längsausdehnung des Kerns leichter aufzunehmen.

2. Gekapselte ölgefüllte Kabelanlage nach Anspruch 1, dadurch gekennzeichnet, daß wenigstens ein gekrümmter Teil an einer Stelle entlang des Rohres mit Abstand von einem Kabelabzweig (23) in einem vorbestimmten Abstand angeordnet ist, wobei ein gerader Teil (27) des Rohres (11, 21) zwischen diesen liegt.

3. Gekapselte ölgefüllte Kabelanlage nach Anspruch 1 oder 2, dadurch gekennzeichnet, daß der gekrümmte versetzte Teil (14, 24) eine glatte und kontinuierliche Krümmung aufweist.

4. Gekapselte ölgefüllte Kabelanlage nach Anspruch 1 oder 2, dadurch gekennzeichnet, daß der versetzte Teil (14, 24) in einer horizontalen Ebene gekrümmt ist.

5. Gekapselte ölgefüllte Kabelanlage nach Anspruch 1 oder 2, dadurch gekennzeichnet, daß der versetzte Teil (14, 24) in einer vertikalen Ebene gekrümmt ist.

6. Gekapselte ölgefüllte Kabelanlage nach Anspruch 1 oder 2, dadurch gekennzeichnet, daß wenigstens zwei gekrümmte versetzte Teile (14, 24) vorgesehen sind, von denen einer in einer horizontalen Ebene und der andere in einer vertikalen Ebene gekrümmt ist.

7. Gekapselte ölgefüllte Kabelanlage nach Anspruch 1 oder 2, dadurch gekennzeichnet, daß wenigstens zwei versetzte Teile (14, 24) in gegenseitig verschiedenen Ebenen gekrümmt sind.

## Revendications

1. Câble électrique sous tube rempli d'huile comprenant un tube (11, 21) et une âme de câble (12, 22) enfilée dans le tube (11, 21), caractérisé en ce que le tube comporte au moins une partie décalée et incurvée (14, 24) disposée dans une position le long du tube (11, 21) de manière à absorber plus facilement l'ondulation de l'âme du câble résultant de sa dilatation longitudinale.

2. Câble électrique sous tube rempli d'huile selon la revendication 1, caractérisé en ce qu'au moins une partie incurvée est disposée dans une position le long du tube espacée d'une jonction de câble (23) à une distance prédéterminée, avec une partie rectiligne (27) du tube (11, 21) intercalée entre elles.

3. Câble électrique sous tube rempli d'huile selon la revendication 1 ou 2, caractérisé en ce que la partie décalée et incurvée (14, 24) présente une courbe régulière et continue.

4. Câble électrique sous tube rempli d'huile selon la revendication 1 ou 2, caractérisé en ce que la partie décalée (14, 24) est incurvée dans un plan horizontal.

5. Câble électrique sous tube rempli d'huile selon la revendication 1 ou 2, caractérisé en ce que la partie décalée (14, 24) est incurvée dans un plan vertical.

6. Câble électrique sous tube rempli d'huile selon la revendication 1 ou 2, caractérisé en ce qu'au moins deux parties décalées et incurvées (14, 24) sont prévues, l'une étant incurvée dans un plan horizontal et l'autre étant incurvée dans un plan vertical.

7. Câble électrique sous tube rempli d'huile selon la revendication 1 ou 2, caractérisé en ce qu'au moins deux parties décalées (14, 24) sont incurvées dans des plans mutuellement différents.

# F I G. 1

# F I G. 2

0 050 206

F I G. 3

F I G. 4

F I G. 5

# F I G. 6

# F I G. 7

# F I G. 8